# DEMANDE DE BREVET EUROPEEN

(11) **EP 2 227 936 A1**
(43) Date de publication de la demande: **15.09.2010**
(21) Numéro de dépôt: 10366002.3
(22) Date de dépôt: 04.03.2010
(51) Int. Cl.: A01C 21/00, C05F 11/08

(54) **Biofertilisation de grandes cultures à l'aide de bactéries azotobacteraceae ayant sur-accumlé du molybdène**

(30) Priorité: 09.03.2009 FR 0901062
(71) Demandeur: Claude, Pierre-Philippe, 54000 Nancy (FR)
(72) Inventeur: Claude, Pierre-Philippe, 54000 Nancy (FR)

(57) **Abrégé**

L'invention consiste donc en une utilisation de cellules *Azotobacteraceae* ayant sur-accumulées du Mo (molybdène) pour la biofertilisation de cultures non-Fabaceae nécessitant une **dose-hectare effective de Mo.** Cette **dose-hectare effective de Mo** est comprise entre l'équivalent de 0,5 et 25, plus particulièrement entre 1 et 10, et avantageusement d'environ 5 g-Mo par hectare. Ladite suraccumulation du Mo est elle à hauteur **d'au moins 100 à 500 x 10⁻¹² ug-Mo par cellule** ***Azotobacteraceae**.* Lesdites cellules azotobactériennes viables sont apportées aux résidus de culture pailleux au sol en pré-semis d'une céréale ou d'un colza d'hiver. Lesdites *Azotobacteraceae* sont apportées en nombre important, soit entre **1 x 10¹¹à 1 x 10¹³,** et avantageusement **5 x 10¹²** cellules Azotobacteraceae viables par hectare. Ces cellules sont avantageusement produites par fermentation à l'état solide en présence de Mo ; la molarité réactionnelle du Mo est comprise entre de valeurs de **0,1 et 25 mM** (millimolaire), plus particulièrement entre **0,5 et 12,5 mM-Mo,** et avantageusement de **1 à 10 mM-Mo.** Du coup, le Mo non-intégré par suraccumulation aux biomasses azotobactériennes lors de ladite fermentation à l'état solide est retenu es ainsi intégré à la dose-hectare effective de Mo apportée à la culture.

## Description

### Domaine technique de l'invention

Le domaine de l'invention concerne la biofertilisation bactérienne des grandes cultures non-légumineuses. L'invention concerne aussi le secteur des fermentations à l'état solide et la production industrielle de biomasses bactériennes. Enfin, il est question d'utilisation de cofacteurs enzymatique métalliques tels que le molybdène notamment.

### État de la technique

### LA BIOFERTILISATION À L'AIDE DE BFCP AZOTOBACTERACEAE

Les BFCP (bactérie favorisant la croissance des plantes) jouent rôle important dans la croissance des plantes. Elles colonisent, outre les racines de certaines cultures, les résidus de cultures (pailleux), les engrais organominéraux et/ou les biomasses racinaires résiduelles. Les mécanismes responsables de l'amélioration de la croissance comprennent : (i) la production de sidérophores extracellulaires (agents microbiens de transport du fer) qui peuvent s'associer de manière efficace avec le fer présent dans l'environnement en le rendant moins disponible pour certaines microflores naturelles non-phytogènes, (ii) l'antibiose contre des bactéries et des champignons pathogènes, (iii) la production de substances favorisant la croissance, et iv) la solubilisation des phosphates organiques et inorganiques. Les BFCP appartiennent à plusieurs genres, y compris *Agrobacterium, Alcaligenes, Arthrobacter, Azotobacter, Bacillus, Cellulomonas, Erwinia, Flavobacterium, Pseudomonas, (Brady)rhizobium* et *Xanthomonas.*

Le genre *Azotobacter* est composé d'au moins 6 espèces: *Azotobacter* armeniacus, *Azotobacter* beijerinckii, *Azotobacter* chroococcum, *Azotobacter* nigricans, *Azotobacter* paspali et *Azotobacter* vinelandi. La biofertilisation azotobactérienne consiste en l'utilisation d'inocula BFCP diazotrophes, avantageusement du genre *Azotobacter* de la famille des *Azotobaceracea.* Les bactéries membre de la famille *Azotobacteraceae* sont de bactéries libres, aérobies et capables de fixer l'azote de manière non symbiotique. Leurs populations peuvent varier dans le sol mais ne dépasse que très rarement 10² à 10³ par gramme de sol.

### L'EFFICACITÉ PONDÉRAL DU MOLYBDÈNE EN PRODUCTION VÉGÉTAL

Le Mo est un cofacteur de plusieurs enzymes végétales, y comprise la nitrate réductase (NR) impliquée sans le métabolisme azote. Or le molybdène est un oligoélément coûteux qui fait l'objet de normes environnementales. L'amélioration de l'efficacité pondérale et élémentaire du Mo est donc recherchée en agronomie. De plus l'efficacité pondérale des engrais Mo est apparemment relativement faible. En effet et par exemple, les teneurs en Fe et Mn par rapport à celles du Mo de divers produits fertilisant (Agronutrition SAS, France) sont présentés au Tableau A.

**Tableau A : Rapports entre les teneurs élémentaire du fer (Fe), du molybdène (Mo) et du manganèse (Mn), ainsi que les dose-hectare habituelles pour divers matières fertilisantes actuellement commercialisées en Europe.**

| Produit commercial | Fe/Mo | Fe/Mn | Mn/Mo | L/ha | kq/ha |
|---|---|---|---|---|---|
| | | | | (foliaire) | (racinaire) |
| Alcygol FMn® | | 1,75 | | 3 | |
| Microstar PMX® | 4 | 1 | | | 20 |
| Alcygol Total® | 6 | 0,6 | | 3 | |
| Fertigofol 313® | 5 | 0,5 | | 5 | |
| Cigophol Oligos® | 5 | 0,5 | | 5 | |
| Boronia Mo® | | | 0,1 | 3 | 5 à 8 |

Or, dans un sol arable le rapport entre l'extractabilité du Fe et celle Mo est d'environ 1 500 ; les teneurs en Fe de la plante entière et, plus particulièrement de sa dinitrogenase sont elles en moyenne de 150 et 15 fois supérieure à celles du Mo. Ces teneurs en Fe et Mn des matières fertilisantes par rapport au à celles du Mo sont donc bien inférieurs aux teneurs relatives des tissues végétaux, voire de l'extractabilité de ces éléments dans le sol (Tableau B).

**Tableau B : Rapports (oligo)élémentaires typiques en termes d'extractabilité du sol (arable), de teneurs végétales, et de la dinitrogenase, ainsi que pour certains matières fertilisantes typiques actuellement commercialisées.**

| | Fe/Mo | Fe/Mn | Mn/Mo |
|---|---|---|---|
| Extractabilité sol | ∼1500 | ∼ 2 à 5 | ∼ 500 |
| Teneur végétale | ∼150 | ∼ 5 à 15 | ∼ 50 |
| Teneur dinitrogenase | ∼15 | nd | nd |
| Matières fertilisantes typiques | ∼ 5 | ∼ 0,5 à 1,5 | ∼ 0,10 |

En d'autres mots, les rapports des quantités de Fe à celle du Mn nécessaire à la pleine croissance des grandes cultures est normalement de l'ordre de 5 à 15 ; pour le Fe par rapport au Mo et le Mo par rapport au Mn ces rapport sont de l'ordre de 150 à 1000 et de 30 à 60. Les quantités de Mo apportées par rapports à celles du Fe et/ou de Mn via les susdits produits (Tableau B) sont donc relativement démesurées (sur-doséses) par rapport à celles effectivement prélevées par la grande culture. En d'autres mots, et par exemple, la teneur en Fe de tissus végétaux est ∼ 150 fois celle du Mo, tandis que la concentration du Fe dans Fertigofol 313™ - par exemple, n'est que de 5 fois celle du Mo ; par rapport à sa teneur relative au Fe, sa concentration dans Fertigofol 313™ est 30 supérieure. A peu près le même constat peut être fait pour les autres produits fertilisants de ce type. Même par rapport à la teneur e Mo de la dinitrogenase - pourtant particulièrement riche en Mo, lesdits produits Agronutrition sont sur-dosés en Mo (Tableau B).

La phytodisponibilité du Mo est donc relativement faible par rapport à celles du Fe et du Mn, et c'est vraisemblablement pourquoi le Mo est sur-dosé par rapport au Fe ou au Mn dans les susdites préparations d'engrais commerciaux. Par exemple, face à cette relative indisponibilité du Mo, l'approche habituelle semble donc être d'augmenter la teneur relative du Mo par rapport à celle des autres oligo-éléments, voire par rapport à celle des macro-éléments comme le propose WO 91/09818. Bien que ces approches soient agronmiquement efficaces, leurs rentabilités sont faibles étant donné le coût de la matière première qu'est le Mo. Même les apports foliaires ne semblent pas améliorer l'efficacité relative du Mo. En effet, les produits commerciaux présentés au Tableau A sont aussi applicables au feuillages sans que leurs rapports Fe/Mo soit pour autant augmenté, et cela malgré que leurs doses-ha soient parfois légèrement plus faibles par voie foliaires, soit ici et par exemple de 3 à 5 L/ha (Tableau A).

Il serait donc avantageux de pouvoir réduire la dose-hectare effective de Mo de l'actuelle quelques dizaines de g - de 40 à 100 g, à au plus quelques g par hectare. Du coup, l'efficacité relative des engrais oligoélémentaires à base de Mo par rapport aux teneurs en Mo des grandes cultures serait amélioré et plus comparable à celles des engrais oligoélémentaires à base de Fe et/ou de Mn. Ces éventuels apports de Mo minorés à quelques g par hectare serait aussi comparables aux prélèvements en Mo par les grandes cultures céréalières, soit de l'ordre de 1 ppm x 5 à 7 tonnes (10⁶ g) de récolte exportable = **5 à** ***7 g par hectare**.* En ce sens, les apports actuels de presque un ordre de grandeur supérieure à ce prélèvements pourraient aussi à terme constituer en soi en facteur de pollution des sols de fait de l'accumulation de reliquats de Mo.

### OU VA TOUT CE MO ?

Les sols agricoles ne sont pas nécessairement capables de fournir un plein complément de Mo à une flore azotobactérienne en pleine expansion du fait d'un apport massif de substrat carboné, suite à l'enfouissement des résidus de culture au sol par exemple. En effet, l'activité de la nitrogenase azotobactérienne peut être utilisée comme indicateur de la biodisponibilité du Mo dans un sol arable (Franco et al. 1978). En ce sens, Horner et Allison (1943), toute en arguant que le rendement diazotrophique in situ des *Azotobacteraceae* est probablement faible en terme agronomique - argument classique depuis réfuté (voir notamment Claude et Fillion 2004 et Halsall et al. 1986), reconnaissent aussi que la présence de Mo tellurique est conséquente pour le fonctionnement de la diazatrophie azotobactérienne. Ce besoin en Mo de la nitrogenase bactérienne explique probablement pourquoi les *Azotobacteraceae* ont acquise au cours de leur évolution la capacité à stocker du Mo bien au-delà de leurs besoins immédiats ; elles *sur-accumulent* en sorte le Mo au dépends de leur environnement immédiat (voir *infra*).

La nitrogenase est un complexe oligomérique composé de deux types bien différents de protéines. L'Une, la ferro - protéine dite *composante I,* est un homodimère (PM du protomère = 34 000) qui enrobe un centre Fe₄S₄ et possède deux sites de fixation pour l'ATP. L'autre, la ferro - molybdo - protéine dite *composante II,* est un tetramère (PM = 220 000) de stoechiométrie α₂β₂. Cette protéine, dépourvue de tryptophane, renferme deux atomes de Mo, de 28 à 32 atomes de Fe, et autant de S. Le rapport moléculaire Fe/Mo pour la composante ferro-molybdénique de la nitrogenase (i.e. la dinitrogenase) est donc d'environ 15. ). Le Mo, tout comme le fer (Fe) ett dans une moindre mesure le vanadium (V), est donc effectivement un cofacteur essentiel pour le fonctionnement du complexe nitrogenase (Igarashi et Seefeldt 2003 ; Loveless *et al.* 1999).

En effet, les BFCP *Azotobacteraceae* sont particulièrement efficaces pour ce qui est du prélèvement d'oligoéléments, y compris donc le Mo. En effet, des quelques 50 enzymes comportant du Mo recensées à ce jour, plus de 90% sont exclusivement bactériennes, y compris donc la dinitrogenase partie du complexe enzymatique dit nitrogenase. C'est surtout en milieux solides que les *Azotobacter* ont la capacité de stocker jusqu'à 25-30 fois la quantité de Mol nécessaire au fonctionnement à plein régime du complexe nitrogenase. Du coup elles séquestrent la quasi-totalité du Mo dans leur environnement immédiat, ce qui en situations écologiques leur confère un net avantage écologique.

De plus, cette voracité des *Azotobacteraceae* pour le Mo coïncide avec une rôle très particulier du Mo dans la synthèse et le fonctionnement de la nitrogenase, notamment de la composante dite I ce cette enzyme. La nitrogenase comporte un cofacteur Mo essentiel (Mendel et Hänsch 2002) qui n'est que dans la Composante I de la dinitrogenase - la Composante Il ne contenant que du Fe et pas de Mo (Yates et Planqué 1975), dont une des caractéristique par rapport à la composante II, est de comporter une quantité appréciable de tryptophane, soit 2,5%, *i.e.* jusqu'à 4 à 5 fois plus que dans l'ensemble de la cellule.

Pour faire simple, disons que cette sur-accumulation de Mo par les *Azotobacteraceae* contribue surtout à satisfaire les besoins en Mo de la composante I de la nitrogenase azotobactérienne. Le développement accéléré de ce complexe nitrogenase en situations agro-écologiques pauvres en N - eg. en présence de quantités massives de résidus de culture pailleux enfouis, confère aux Azotobacteraceae un net avantage vis-à-vis de leurs consoeurs moins aptes à faire un tel usage intensif du Mo et/ou de leurs appareilles diazotrophes.

### LES AZOTOBACTERACEAE SONT VORACES EN TERMES DE PRELEVEMENT ET STOCKAGE DU MO

Les *Azotobacteraceae* ont la capacité de *suraccumuler* le Mo, soit de l'ordre de 100 fois plus que le maïs ou le blé. Par suraccumulation de Mo je veux dire ici accumulation du Mo par des cellules *Azotobacteraceae* au-delà des quelques 15 à 20 ug-Mo par g de biomasse (i.e. soit environ 10¹² cellules *Azotobacteraceae*) strictement nécessaire à la synthèse et au fonctionnement à plein régime de la dinitrogenase, composante de la nitrogenase (Nif) impliquée dans la fixation biologique de l'azote.

En effet, selon les données rapportées par Loué (1993), les teneurs en Mo des végétaux agricoles sont d'au plus de l'ordre de quelques ppm ; selon les données de Pienkos et Brill 1981, ceux d'*Azotobacter vinelandii* peuvent facilement atteindre quelques centaines de ppm. Selon Pienkos et Brill 1981, les cellules Azotobacteraceae ont effectivement cette capacité d'accumuler par prélèvement non-régulé (i.e. mode constitutif) et actif (i.e. en opposition à un gradient de concentration Mo ; Elliot et Mortenson 1975) plus de 25 fois les quantités de Mo nécessaires à la synthèse et au fonctionnement de la dite composante I de la nitrogenase d'*Azotobacter.* Ladite sur - accumulation du Mo est quasi linéaire est complète (100%) à hauteur de quelques centaines de ug de Mo par L de milieux de culture (Pienkos et Brill 1981). Les *Azotobacteraceae* réussissent en sorte à concentrer la quasi-totalité de ces quelques centaines de ug de Mo dans au plus quelques g de biomasse. A noter que cette suraccumulation n'est pas observée chez une diazotrophe anaérobique telle que *Klebsiella pneumonia* ; cette différence dans le métabolisme molybdénique pourra servir à assurer la dominance, voire la pureté d'éventuelles préparations *Azotobacteraceae.*

Bien que ce phénomène de sur-accumulation du Mo chez les *Azotobacteraceae* particulièrement avantageux pour celles-ci lorsque cultivées sur milieux solides - des gels agar au sens de Maynard et al. 1994, cette caractéristique des *Azotobacteraceae* n'a pas été valorisée à ce jour en agriculture, notamment dans le secteur de la biofertilsiation. Bien que cette sur - accumulation soit en principe la plus avantageuse pour les *Azotobacteraceae* en/sur milieux solides - et cela du fait, un peu à la façon des sidérophores et du fer, de séquestrer ce cofacteur (Mo) au dépends des autres familles bactériennes, elle peut aussi être observée in vitro en milieux liquides.

### LA COMPLEMENTATION MOYBDENIQUE DE LA BIOFERTILISATION AZOTOBACTERIENNE ?

En situations agronomiques - notamment en présence massive de résidus de culture pailleux enfouis, le Mo pourrait donc être avantageusement apporté directement aux BFCP, et avantageusement *Azotobacteraceae.* Ces BFCP seraient maintenant d'autant plus actives, tout en apportant cette fois-ci des quantités appréciables d'azote au système sol - plante.

Encore faut-il que celles-ci soient suffisamment nombreuses et actives dans au près de la rhizosphère, préférablement au sein de la résidusphère. Pour ce faire, il est possible, par exemple, de co-formuler des BFCP diazotrophes de la famille des *Azotobacteraceae* et d'introduire cette préparation dans la résidusphère en proximité de la rhizosphère. Or, malgré cette précaution, une partie du Mo ainsi apporté sera néanmoins immanquablement utilisé par les bactéries non - BFCP su sol, ou encore fixé sur des composé alumino-ferrique du sol. Il serait donc en principe plus utile de diriger ce Mo biofertilisant de façon à cibler précisément les cellules *Azotobacteraceae,* y compris celles éventuellement réintroduites par inoculation de la résidusphère selon, par exemple, Claude et Fillion 2004.

A noter aussi que la surabondance de cations polyvalents, ferriques notamment, peut nuire au prélèvement de certains co-facteurs enzymatiques, y compris le Mo. En effet, le fer fait aussi l'objet d'une captation par les sidérophores produits par *Azotobacter* (Corbin et ai. 1969). Il s'avère que ces même sidérophores ont aussi une certaine affinité pour le Mo (Page et al. 1982, et Cornish et Page 2000). En effet, la présence de fer concurrence en sorte celle du Mo par ce qui est de ces sites de captation sidérophoriques, et vice et versa (Duhme et al. 1996). Il est donc normal de s'attendre à ce que la surabondance de cations ferriques en proximité des résidus de culture pailleux au sol, puisse nuire à l'alimentation des Azotobacter en Mo. Cette contreperformance de la présence simultanée d'ions Mo et Fe sur l'alimentation oligo-élémentaire des *Azotobacteraceae* est particulièrement conséquente si l'on considère les formulations Fe/Mo des quelques produits commerciaux au Tableau A. C'est ainsi qu'il est peu recommandable de diriger ceux-ci directement vers les résidusphères azotobactérisées selon, par exemple, Claude et Fillion 2004 et FR 01/15542.

### QUELQUES DEMANDES DE BREVETS PERTINENTES ?

Une recherche préliminaire de la base de connaissance révéla quelques demandes de brevets jugées a priori pertinentes, à elles seules, voire en combinaisons.

Un premier document issu de cette recherche préliminaire - US 4 877 739 A, décrit simplement l'utilisation d'une souche *d'Azotobacteraceae* dite *antiammonia* (*sic*), i.e. non sujette à une stricte rétroaction négative (*negative feedback*) de son appareil diazotrophe par la simple présence d'azote assimilable. Ce concept depuis passé dans l'état de la technique et a priori bien connue (eg. Brewin et al. 1999) ne fait aucunement état de l'utilisation de cellules *Azotobacteraceae* ayant sur-accumulées du Mo au sens de la présente invention, et certainement afin de réduire la dose-hectare effective du Mo. De plus, la présente invention (FR0901062) fait expressément référence à la fermentation à l'état solide comme mode de réalisation préféré ; US 4 877 739 A, elle, n'apporte que des solutions à base de fermentation à l'état liquide. Comme de raison, aucune mention de l'amélioration de l'efficacité pondérale d'engrais Mo n'est aperçue, l'essentiel des exemples d'application étant plutôt du domaine de la pharmacie et de la cancérologie.

Lors de cette recherche préliminaire, il fut aussi question de la production d'engrais organo-minéraux (EOM) enrichis d'*Azotobacteraceae* et de Bacillus, et donc dotés de capacités diazotrophe et de dissolution de l'apatite du sol (cf. US 6 969 688 B1). L'éventuelle sur - accumulation de Mo par ces bactéries et son effet sur la réduction de la dose-hectare effective de Mo au sens de la présente invention n'est pas apparente. Il semble plutôt que l'invention réside dans le respect de certain ratios spécifiques *Azotobacteraceae :* Beijerinckia et Bacillus megaterium : B. mucilaginosus ; il n'est nullement question de la valorisation de ces espèces bactériennes comme vecteur de Mo sur-accumulés au sens de la présente invention.

Il fut aussi question de l'antériorité du concept même d'azotobactérisation des résidus de culture pailleux au sol tel que proposé dans FR 2 910 230 A1**.** Or, ce certificat d'utilité ne fait que démonter l'utilité de ce type de valorisation microbiologique des résidus de culture pailleux au sol en termes de *stabilité des rendements,* i.e. de réductions des variations spatio-temporelles entre (micro)parcelles agronomiques au champ ainsi traitées par rapport à celles entre parcelles témoins non-traitées. Encore une fois - et bien que la présente invention fait elle aussi appelle à une telle valorisation microbiologique des résidus de culture pailleux au sol, FR 2 910 230 A1 ne fait aucunement mention d'une quelconque rationalisation de la dose-hectare effective de Mo du fait d'une sur - accumulation de Mo par les *Azotobacteraceae* ainsi apportées.

Enfin, une dernière demande de brevet - WO 96/34840 A1) prévoit - ingénieusement, de déprimer (réprimer) temporairement la diazotrophie d'*Azotobacter* et d'*Azospirillum -* à l'aide d'apports minimes de glutamate, au profit immédiat d'une plus gande prdouction d'alginate - et donc de glycocalyx (capsules bactériennes), et plus surprenant, à terme d'une amélioration du taux d'activité de cette même diazotrophie précédemment réprimée. Malgré la mention évidente de sels sodiques de Mo dans le/les milieux de culture, ce Mo n'est nullement stratégique et/ou vectorisé au sens de la présente invention ; il n'est qu'accessoire lors de la production par fermentation à l'état liquide des biomasses bactériennes.

### Définitions

**Dose-hectare** : La quantité de matière active ou de biomasses microbiennes à apporter selon les préconisations à un hectare de sol sur 10 cm de profondeur supposant une densité apparente de 1,00. Cette dose est donc apportée à l'équivalent de 10⁹ g de sol. (*Nb*. Un hectare de sol en ce sens reçoit approximativement 10 tonnes (10⁷ g) de résidus de culture pailleux enfouis, soit *grosso modo* 1% p/p.).
**Dose-hectare effective (de Mo) :** La quantité de Mo apportée par hectare, ou son équivalent par g de sol (1 hectare : 10⁹ g de sol sur 10 cm de profondeur en surface), capable d'optimiser le rendement agronomique, ou - en serre, la production de matière sèche des parties aériennes (MSPA) et/ou leurs mobilisations élémentaire (MOB-N, MOB-P, MOB-K, *etc.*). Selon l'état de la technique, en agronomie cette dose effective est actuellement de l'ordre d'au moins 25 à 40 g, voire jusqu'à récemment 100 g.
**Cellules filles :** les deux cellules bactériennes résultant de la division d'une cellule « mère ». Le cycle cellules mère → filles est appelé aussi délais générationnel.
**Molarité réactionnelle du Mo (mM-Mo) :** En présence de population *Azotobacteraceae,* la quantité de Mo apportée par poids et/ou volume réactionnelle - ici avantageusement en kg de fermentation à l'état solide, apte à assurer une sur - accumulation du Mo par ces *Azotobacteraceae.*
**Sur - accumulation (du Mo par les *Azotobacteraceae*) :** accumulation du Mo par des cellules *Azotobacteraceae* au-delà des quelques 15 à 20 ug-Mo par g de biomasse (i.e. soit environ 10¹² cellules *Azotobacteraceae*) strictement nécessaire à la synthèse et au fonctionnement à plein régime de la dinitrogenase, composante de la nitrogenase impliquée dans la fixation biologique de l'azote. Cette définition opérationnelle est fondée sur les données de Pienkos et Brill 1981.
**Résidusphère :** Volume ou zone du sol entourant immédiatement les résidus de culture pailleux, engrais organominéraux et/ou biomasses racinaires résiduelles, et plus ou moins influencé par ceux-ci. Il est aussi question d'un « noyau » où se situe la décomposition desdits résidus de culture. A noter que les microorganismes responsables de la décomposition occupent généralement moins de 1 % de l'ensemble du sol et sont particulièrement présents et actifs dans la résidusphère.

### Divulgation de l'invention

### Problème technique

La mauvaise (faible) efficacité pondérale du Mo par rapport aux autres oligoéléments cationiques fertilisants pourtant moins coûteux, ainsi qu'une certaine concurrence contreproductive des ions Fe et Mo mélangés, sont préjudiciables au secteur de fertilisation, voire de la biofertilisation, des grandes cultures non-légumineuses. Le Mo apporté directement au sol, voire au résidus de culture pailleux au sol, est aussi prône à une immobilisation non-azotobactérienne.

Il s'agit donc d'améliorer l'efficacité pondérale du Mo en réduisant sa dose-hectare effective, actuellement aux environs de 40 à 100 g par hectare pour ce qui est des cultures légumineuses, à quelques grammes par hectare de façon à en justifier l'utilisation économique et rentable pour ce qui est des grandes cultures non-légumineuses et/ou de Cipan (culture intermédiaire pièges à nitrates). Accessoirement, le problème technique à résoudre consiste donc à trouver une façon d'expédier du Mo vers, de cibler en sorte, les *Azotobacteraceae* présentes dans la rhizo/résidusphère lors de la (bio)fertilisation azotobactérienne desdites grandes cultures non-légumineuses.

Ce problème technique est d'autant plus difficile à résoudre du fait que les méthodes existantes pour un tel « ciblage nutritif » applicables au secteur de la biorestauration des sols sont inopérables en agronomie, notamment en grandes cultures. En effet, ce problème technique qu'est l'apport ciblé d'oligoéléments - en particulier ici le Mo, voire d'autres types de molécules, à une flore bactérienne BFCP in situ à déjà fait l'objet d'un certain développement, notamment-voire exclusivement - dans le secteur de la biorestauration des sols contaminés (eg. US 6,331,300 B1) ; aucune étude ou brevet concernant des applications agronomiques de ces concepts me sont connues. Pire, les susdites approches proposent pour l'essentiel l'utilisation de supports organo-minéraux (eg. zéolites, argiles, billes microporeuses, micro-capsules, etc.). Or, l'utilisation de ces matières, souvent relativement coûteuses, est semble-t-il peu ou pas utile en agronomie, essentiellement pour une raison de coûts technologiques.

### Solution technique

Il est proposé de *sur-accumuler -* par séquestration intracellulaire, le Mo au sein de cellules *Azotobacteraceae,* celles-ci pouvant par la suite véhiculer, voire recycler, le Mo vers la résidusphère et/ou la rhizosphère. La solution technique proposée consiste donc à exploiter cette caractéristique qu'ont certaines *Azotobacteraceae* à stocker par suraccumulation du Mo, et de se servir par la suite de ces cellules *Azotobacteraceae* comme vecteurs pour ce type d'oligoéléments cofacteurs enzymatiques, et non plus seulement comme simples propagules bactériennes. Les *Azotobacteacea* deviennent donc des véhicules (vecteurs) de choix du fait qu'elles prélèvent et stockent du Mo constitutivement et peuvent éventuellement le re-largué le rendant immédiatement disponible à leurs cellules filles. Pour que ce re-largage soit agronomiquement utile, il faut que les *Azotobacter* réintroduites dans la résidusphère aient préalablement stockées suffisamment de Mo.

Une fois intégrée à des formulations solides, avantageusement selon FR 05/05753, il est possible - voire préférable, d'accroître ces biomasses azotobactériennes par voie de fermentation à l'état solide, selon le procédé décrit dans FR 06/00014 par exemple, au sein même de cette formulation conditionnée de façon à pouvoir être éventuellement pulvérisée à la surface de résidus de culture au sol (Claude et Fillion 2004). Ce type de production *in vitro* (ou *in saco*) est actuellement utilisée par certain industriels pour la fabrication d'inocula rhizobium. Lors de cette fermentation à l'état solide les souches *Azotobacteraceae* pourront aussi bénéficier d'apports de Mo, et cela surtout parce qu'elles sont justement en milieu solide plutôt en milieu liquide.

L'invention consiste donc en une utilisation de cellules *Azotobacteraceae* ayant sur-accumulées du Mo (molybdène) pour la biofertilisation de cultures non-Fabaceae nécessitant une **dose-hectare effective de Mo**. Par dose-effective de Mo je veux dire ici la quantité de Mo apportée par hectare, ou son équivalent par g de sol (1 hectare : 10⁹ g de sol sur 10 cm de profondeur en surface), capable d'optimiser le rendement agronomique, ou - en serre, la production de matière sèche des parties aériennes (MSPA) et/ou leurs mobilisations élémentaire (MOB-N, MOB-P, MOB-K, etc.). Selon l'état de la technique, en agronomie cette dose effective est actuellement de l'ordre d'au moins 25 à 40 g, voire jusqu'à récemment 100 g. Or, ici cette **dose-hectare effective de Mo** est comprise entre l'équivalent de 0,5 et 25, plus particulièrement entre 1 et 10, et avantageusement d'environ 5 g-Mo par hectare. Ladite suraccumulation du Mo est elle à hauteur **d'au moins 100 à 500 x 10⁻¹² ug-Mo par cellule *Azotobacteraceae*.** Pour fin de calcul et de dosage, ici nous assumons qu'un g de cellules Azotobacteraceae comprend environs 10¹² cellules ; alternativement, il est donc loisible d'exprimer cette suraccumulation du Mo à hauteur d'au moins 100 à 500 ug-Mo par gramme (g) de cellules *Azotobacteraceae*. Au choix. Par suraccumulation du Mo je veux dire ici l'accumulation du Mo par des cellules *Azotobacteraceae* au-delà des quelques 15 à 20 ug-Mo par g de biomasse (i.e. soit environ 10¹² cellules *Azotobacteraceae*) strictement nécessaire à la synthèse et au fonctionnement à plein régime (optimal) de la dinitrogenase, composante de la nitrogenase impliquée dans la fixation biologique de l'azote. Cette définition opérationnelle est fondée sur les données de Pienkos et Brill 1981. De plus, lesdites cellules azotobactériennes viables sont apportées aux résidus de culture pailleux au sol en pré-semis d'une céréale ou d'un colza d'hiver. Cet apport *d'Azotobacteracea* peut ce faire - selon l'état de la technique, voire par tout autre pratique culturale non-bactéricide, y compris et par exemple par voie d'épandage d'un éventuel mélange organo-minéral pulvérulent. Lesdites *Azotobacteraceae* sont apportées en nombre important, soit entre **1 x 10¹¹ à 1 x 10¹³,** et avantageusement **5 x 10¹²** cellules *Azotobacteraceae* viables par hectare. Ces cellules sont avantageusement bien adaptées à la vie ans les sols, et/ou rustiques au sens de FR 01/15542, FR 06/04959 et FR 06/04960, et dont l'utilisation est mentionnée dans Claude et Fillion 2004. Elles sont avantageusement produites par fermentation à l'état solide en présence de Mo ; cette fermentation à l'état solide étant elle avantageusement menée selon l'approche proposée dans FR 06/00014 dont l'utilisation est mentionnée dans Claude et Giroux 2006. Los de cette fermentation à l'état solide, la molarité réactionnelle du Mo est comprise entre de valeurs de **0,1 et 25 mM** (millimolaire), plus particulièrement entre **0,5 et 12,5 mM-Mo**, et avantageusement de **1 à 10 mM-Mo**. Du coup, le Mo non-intégré par suraccumulation aux biomasses azotobactériennes lors de ladite fermentation à l'état solide est retenu es ainsi intégré à la dose-hectare effective de Mo apportée à la culture. Cette dose-hectare effective est maintenant réduite, de son habituelle 40 à 100 g, à moins de 25, avantageusement moins de 10 g, voire d'environ 5 g (i.e. l'équivalent de 5 ng-Mo par g-sol sur 10 cm de profondeur en surface d'un sol arable tempéré.

Il s'agit donc ici d'inocula azotobactériens pour la biofertilisation de grandes cultures non-légumineuses nécessitant une dose-hectare effective de Mo comprenant des cellules *Azotobacteraceae* ayant sur-accumulé du molybdène (Mo) selon une quelconques des revendications précédentes à hauteur **d'au moins 100 à 500 x 10⁻¹² ug-Mo par cellule *Azotobacteraceae.***

Les cellules *Azotobacteraceae* sont avantageusement produites par fermentation à l'état solide en présence d'un sel de molybdène ; ce sel est initialement présent dans le mélange réactionnel pour fermentation à l'état solide à une concentration entre 1 et 1000 mg, avantageusement entre 10 et 250 mg, et préférablement de 100 mg par litre de volume réactionnel (*i.e.* molarité réactionnelle du Mo ∼ 1 mM-Mo), soit de quoi en principe inoculer un hectare de résidus de culture pailleux au sol à hauteur d'au moins 10⁵ cellules *Azotobacteraceae* par g de résidus de culture (Nb. 1 ha de culture céréalière génère environs de 5 à 8 106 g de tels résidus pailleux).

Ce sel de molybdène est soit du molybdate de sodium (Na₂MoO₄), de potassium (K₂MoO₄) et/ou d'ammonium, sachant que l'ammonium peut parfois rétroagir négativement avec sur le fonctionnement de la nitrogenase des *Azotobacteraceae.* Les cellules *Azotobacteraceae* ainsi produites en fermentation à l'état solide en présence d'un minimum de Mo ajouté pourront être réintroduites dans les sols en proximité des résidus de culture pailleux, avantageusement selon Claude et Fillion 2004. Ces cellules, des cellules mère en sorte, re-largueront cette suraccumulation de Mo à leurs éventuelles cellules filles. De plus, à noter que les cellules azotobactérien sont particulièrement bien adaptées à la vie dans les sols arables.

Les apports de Mo sont ainsi concentrés à proximité des cellules azotobactériennes filles, voire partiellement déjà intégrés en elles. Cette disponibilité immédiate du Mo aux cellules azotobactérienne filles des biomasses *Azotobacteraceae* réintroduites par inoculation peut en principe satisfaire jusqu'à quatre populations filiales, soit une augmentation de la population initiale de l'ordre de 10¹² par un facteur 16 (2⁴). De plus, ce ciblage à l'aide des vecteurs que sont maintenant les cellules *Azotobacteraceae* mères équivaut à une réutilisation du Mo par les *Azotobacteraceae* filles ; une partie de ce Mo utilisé lors de la fermentation à l'état solide pour fin de fabrication des biomasses *Azotobacteraceae,* est maintenant utilisé une deuxième fois, *in situ,* afin d'améliorer l'efficacité phytogène des inocula *Azotobacteraceae.* De plus, et en principe, lesdites cellules *Azotobacteraceae* peuvent aussi être intégrées à des engrais organo-minéraux non-bactéricides utilisés comme engrais starter pour de grandes cultures non-légumineuses, telles que le maïs et le sorgho par exemple, et cela avantageusement selon Claude et Giroux 2006.

### Avantages apportés, nouveauté et activité inventive

La présente invention (FR0901062) concerne donc l'utilisation pour la (bio)fertilisation de grandes cultures non-Fabaceae de biomasses microbiennes constituées de cellules *Azotobacteraceae* ayant sur-accumulées du Mo bien au-delà des quantités physiologiquement requises pour assurer un fonctionnement à plein régime de leur appareil diazotrophique.

Cela dit, les quantités de Mo ainsi sur-accumulées par les cellules *Azotobacteraceae* reste petite - de l'ordre de quelque ug par contingent de 10¹² cellules (i.e. environ 1 g de biomasse), par rapport aux quelques 40 à 100 g de Mo normalement préconisés en agronomie pour les grandes cultures. L'invention, elle, prévoit l'apport d'à peine 100 mg de Mo par L de volume réactionnel en fermentation à l'état solide capable de produire ainsi facilement 10 g de biomasse *Azotobacteraceae* (i.e. environ 10¹³ cellules), soit de quoi inoculer de 5 à 8 tonnes de résidus de culture pailleux par hectare. Il est donc ici possible de sur-accumuler plus de 3 mg de Mo (voir les données de Pienkos et Brill 1981), soit environ 3% desdits 100 mg de Mo ; il est donc envisageable - toujours de le cadre de la présente invention, de réduire encore plus, soit à 10 mg, la quantité de Mo apportée au susdit volume réactionnel.

Ce qu'il ya d'étonnant et de non-évident ici c'est qu'en présence de cette sur-accumulation de Mo de l'ordre de quelques mg on puisse maintenant faire l'économie - supprimer, de 35 à 95 g de la dose - hectare normalement prescrite. Cette économie est plus de 1000 fois plus importante que les besoins additionnels en Mo des *Azotobacteraceae* ayant pu ainsi ce gorger (i.e. sur-accumuler) de cet oligoélément.

La présente invention réside donc dans la suppression - en présence d'inocula *Azotobacteraceae* sur résidus de culture pailleux au sol, de l'essentiel - i.e. de 35 à 95 g selon le cas, de la dose-hectare normalement apportée aux culture, même en absence de tels inocula, pourtant - en principe synonymes d'accroissement des populations *Azotobacteraceae* et donc des besoins en Mo du système sol - plante. Pourtant, et étonnamment, la présence d'inocula *Azotobacteraceae* ayant sur-accumulés du Mo est maintenant susceptible de réduire - par jusqu'à deux ordre de grandeurs (100 fois), de telles dose-hectare de Mo, notamment et surtout si elles sont semées sur résidus de culture pailleux azotobactérisés au sol. cette réduction globale des doses-hectare de Mo lors de la valorisation azotobactérienne des résidus de culture pailleux au sol est contre-intuitive pour l'homme de métier, qui lui chercherait à majorée des doses de Mo en présences de telles population azotobactériennes grandissantes.

La dose-hectare de Mo par voie foliaire est aujourd'hui d'approximativement 100 g, tandis que la préparation ayant reçu 10 mM de Mo ne contient qu'un mg de Mo par Kg, soit l'équivalent d'une dose-hectare, d'où une plus grande efficacité pondérale du Mo exogène en présence de cellules *Azotobacteraceae.* Cette valorisation agronomique nouvelle du Mo par les *Azotobacteraceae* permet, étonnamment, une bien meilleure utilisation du Mo, et contribue ainsi à réduire la taille de la dose-hectare optimale de Mo, voire éventuellement d'en faire l'impasse. Du coup, le prix de revient d'une préparation Mo est *grosso modo* réduit au tiers, voire au dixième de ce qu'il eut été sans la présente invention ; le coût du Mo étant un des plus élevés parmi ceux des oligoéléments, cette réduction est très conséquente en terme de rentabilité industrielle et/ou agronomique.

Selon les règles de l'art de la formulation du conditionnement de matières fertilisantes, y compris donc des biomasses *Azotobacteraceae,* les co-formulants Mo et *Azotobacteraceae* seraient normalement produits séparément et mélangés par la suite, avantageusement au moment de la re-suspension des *Azotobacteraceae* en solution, selon le concept décrit dans FR 05/05753 par exemple. Or, l'intégration du Mo à la fermentation à l'état solide et donc, par voie d'accumulation intracellulaire, aux biomasses *Azotobacteraceae* vecteurs de choix pour ce Mo est nouvelle. L'invention permet donc de recycler une même dose de Mo lors du procédé de formulation et fermentation à l'état solide ET réexpédiée localement *in situ* en proximité immédiate des résidus de culture au sol, là où elle est la plus utile en terme agronomiques. Du fait de ce recyclage et de cette localisation l'efficacité pondérale des engrais Mo est grandement améliorée et la dose hectare optimale peut être réduite encore plus conséquemment. Cette suraccumulation de Mo par les *Azotobacteraceae* est d'autant plus utile qu'elle ce fait au dépends d'éventuels contaminants non - diazotrophes ; l'alimentation en Mo de ces fermentations à l'état solide permettant non seulement de séquestrer le Mo et d'augmenter le rendement des biomasses *Azotobacteraceae,* mais aussi d'assurer ainsi une certaine pureté - i.e. ici une dominance microbiologique des *Azotobacteraceae,* de l'inoculum.

### Brève description des dessins et figures

- **Figure A :**: Représentation schématique du fonctionnement - i.e. par la mise en contacte et la subséquente suraccumulation du Mo (carrés hachurés) par les *Azotobacteraceae* (ovales hachurés). Par rapport à un blanc (b), la présence des Azotobacteraceae devrait améliorer l'efficacité pondérale du Mo réduisant ainsi la taille de sa dose-hectare effective (*i.e.* carré gras plus petit pour le témoin), la dose-hectare de Mo pour ce témoin (t) étant elle-même supérieure à celle loisible avec un traitement (T) MOA au sens de la présente invention (*i.e.* carré gras plus petit pour le Traitement MOA). A noter aussi que dans le cas de T, une partie du Mo est effectivement intégrer - par voie de suraccumulation, aux biomasses *Azotobacteraceae* (*i.e.* zone doublement hachurée).
- **Figure B :**: Schéma décrivant sous forme de fonctions quadratiques l'effet d'*Azotobacteraceae* appliquées aux des résidus de culture pailleux au sol sur la production de phytomasse (MSPA, ou matière sèche des parties aériennes) selon la dose-hectare équivalente en ng-Mo par g de sol reconstitué en serre avec (b) et sans (a) la suraccumulation de Mo par les cellules *Azotobacteraceae* (MOA) produites par fermentation à l'état solide au sens de la présente invention. A noter que l'optimum est atteint à une moindre dose de Mo avec plutôt que sans ladite suraccumulation du Mo. Graphiquement cette plus grande efficacité pondérale du Mo à faibles doses se traduit par un décalage entre les éventuelles fonctions (relations) quadratiques décrivant l'efficacité pondérale du Mo avec et sans MOA.

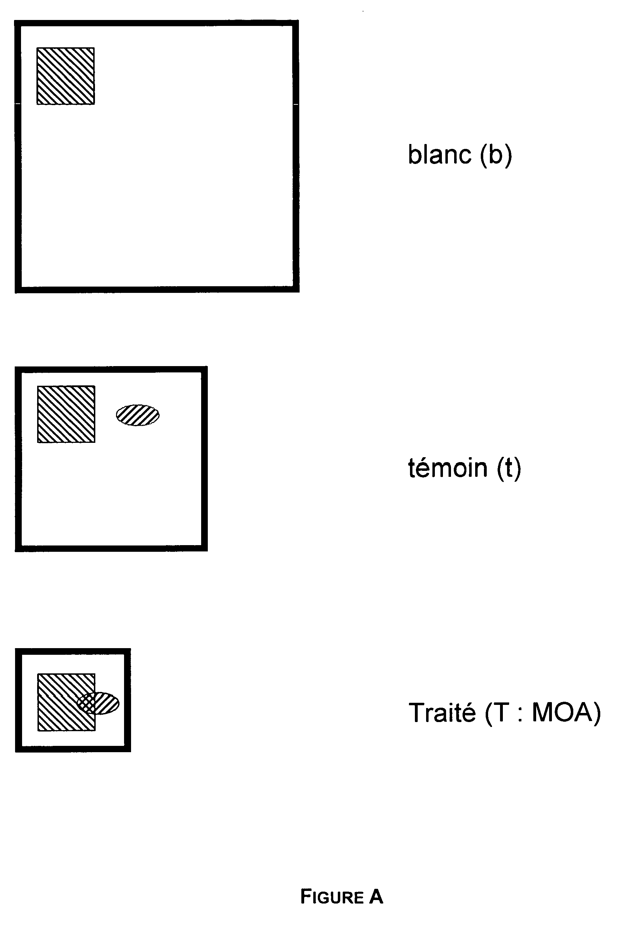

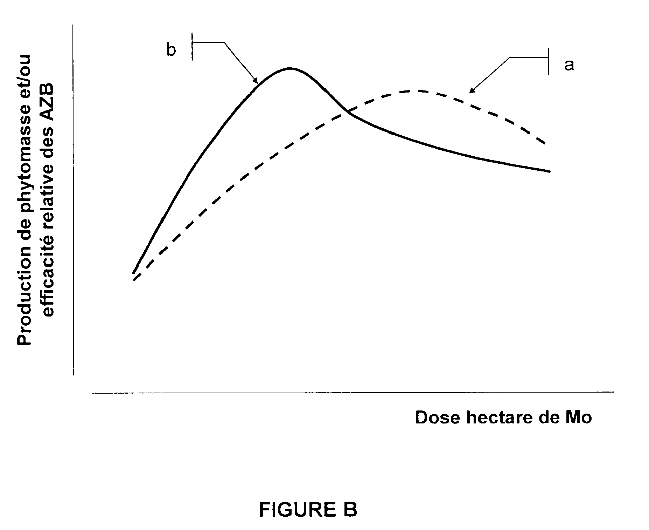

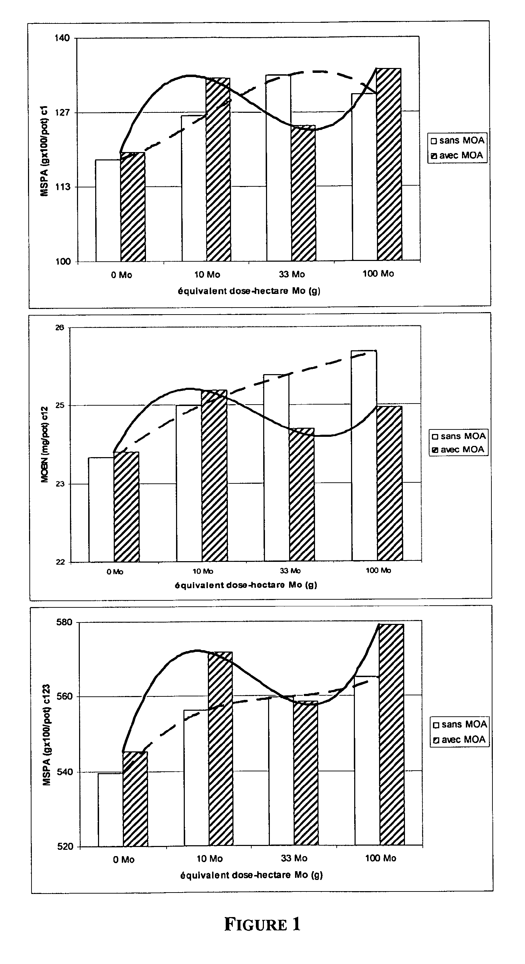

- **Figure 1 :**: Réalisation expérimentale du décalage entre les deux fonctions quadratiques (Figure B) décrivant MSPA (matières sèches des parties aériennes) et/ou MOBN (mobilisation de l'azote par les MSPA) par pot selon la dose-hectare équivalente (ng-Mo par g-sol) avec et sans une suraccumulation du Mo au sens de la présente invention 28 (c1), 54 (c12) et 84 (c123) jours post-semis (jps). A noter - par simple analyse graphique, d'une zone intégrable décrite par ces fonctions de 0 à 10 ng-Mo par g-sol.

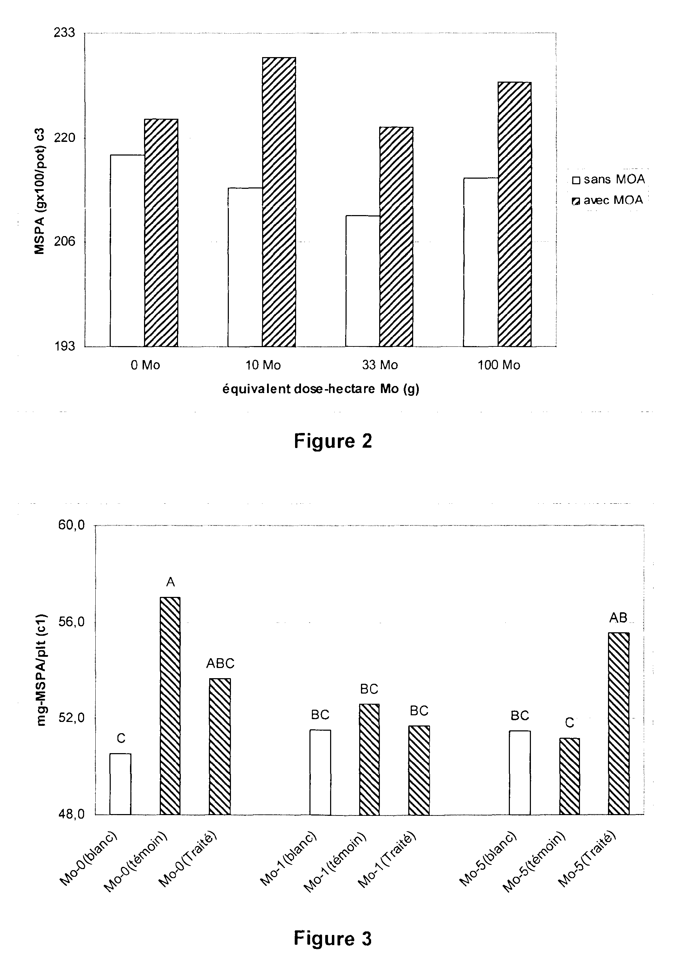

- **Figure 2 :**: Surproduction apparente de MSPA (matières sèches des parties aériennes) par pot attribuable à MOA lors de la troisième coupe (c3) 84 jours post-semis. A noter que cette surproduction est particulièrement prononcée si la dose-hectare Mo équivalente est faible, soit ici 10 ng-Mo par g-sol.
- **Figure 3 :**: Matières sèches des parties aériennes par plantule (MSPA/plt) de *Lolium multiflorum* 28 jours post-semis au moment de la première coupe (c1) selon la dose de molybdène (Mo-0, 1 ou 5 ng-Mo par g-sol) et la modalité (blanc, témoin ou Traité). Les valeurs moyennes associées aux mêmes lettrages ne sont pas significativement différentes (Duncan ; α = 5%). A noter une vraisemblable supériorité de la modalité Traité qu'avec Mo-5.

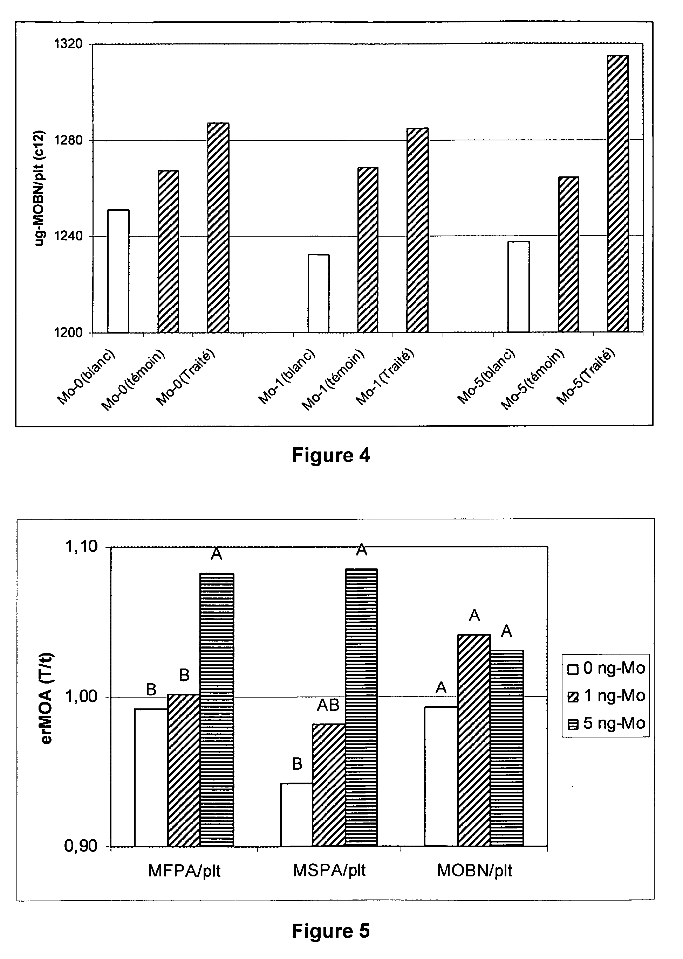

- **Figure 4 :**: Mobilisation de l'azote par plantule (MOBN/plt) par les matières sèches des parties aériennes par plantule de *Lolium multiflorum* 56 jours post-semis après deux coupes (c12) sont la dose de molybdène (Mo-0, 1 ou 5 ng-Mo par g-sol) et la modalité (blanc, témoin ou Traité). Les valeurs moyennes ne sont pas significativement différentes (Duncan ; α = 5%). A noter cependant une vraisemblable supériorité de la modalité Traité, notamment avec Mo-5.
- **Figure 5 :**: Efficacité relative de la suraccumulation probable du Mo par les Azotobacteraceae (erMOA) au sens de la présente invention (T) par rapport à un témoin (t) azotobactérisé mais sans avoir eu pu ainsi préalablement sur-accumuler le Mo. L'erMOA est rapportée selon la dose-hectare équivalente de Mo (ng-Mo par g-sol reconstitué). Le Mo a été - selon le cas, nécessairement et préalablement sur-accumulé lors d'une fermentation à l'état solide dont la molarité réactionnelle fut établie initialement 'a1 mM-Mo. Ces erMOA concernent les matières fraîches (MFPA) et sèches (MSPA) des parties aériennes, ainsi que leurs mobilisation de l'azote (MOBN) 28 jours post-semis (c1). Un rapport T/t implique une erMOA nulle. Pour un type de données, les valeurs moyennes associées au même lettrage ne sont pas significativement différentes (Duncan ; a = 5%).

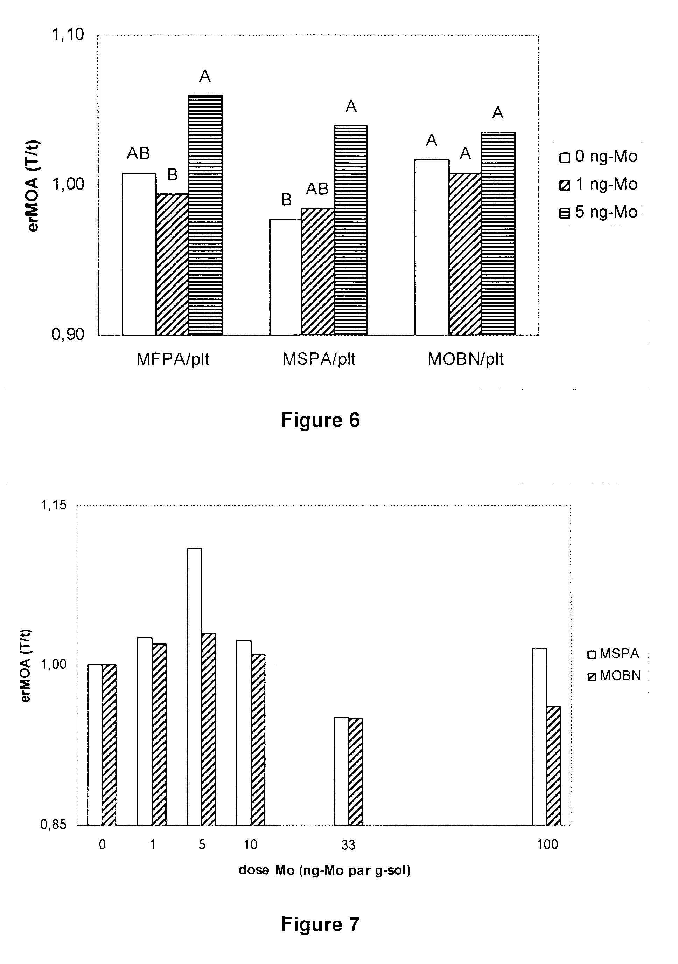

- **Figure 6 :**: Efficacité relative de la suraccumulation probable du Mo par les Azotobacteraceae (erMOA) au sens de la présente invention (T) par rapport à un témoin (t) azotobactérisé mais sans avoir eu pu ainsi préalablement sur-accumuler le Mo. L'erMOA est rapportée selon la dose-hectare équivalente de Mo (ng-Mo par g-sol reconstitué). Le Mo a été - selon le cas, nécessairement et préalablement sur-accumulé lors d'une fermentation à l'état solide dont la molarité réactionnelle fut établie initialement a1 mM-Mo. Ces erMOA concernent les matières fraîches (MFPA) et sèches (MSPA) des parties aériennes, ainsi que leurs mobilisation de l'azote (MOBN) 56 jours post-semis (c12). Un rapport T/t implique une erMOA nulle. Pour un type de données, les valeurs moyennes associées au même lettrage ne sont pas significativement différentes (Duncan ; a = 5%).
- **Figure 7 :**: Valeurs d'erMOA (efficacité relative de la probable suraccumulation du Mo par les Azotobacteraceae au sens de la présente invention lors d'une fermentation à l'état solide) compilées à partir des données des expériences 1 (0, 10, 33 et 100 ng-Mo / g-sol) et 2 (0, 1 et 5 ng-Mo / g-sol) en termes de MSPA et de MOBN. Afin de permettre cette compilation, les données respectives on été calées (noramlisée = 1,00) par rapport aux erMOA pour 0 ng-Mo / g-sol. La position des histogrammes MSPA et MOBN est grossièrement espacé de façon à mieux illustrer la gamme de doses-hectare échelonnée ici sur deux ordre de grandeurs, soit de 1 à 100 ng-Mo / g-sol.

### Mode de réalisation préféré de l'invention

Il est préférable de produire ces biomasses par fermentation à l'état solide du fait que la séquestration du Mo par les *Azotobacteraceae* est beaucoup plus complète et donc bactériostatique à l'égard des éventuels contaminants non - azotobactériens. Un tel procédé de fermentation à l'état solide applicable à la présente invention a déjà été décrit dans FR 06/00014 et FR 05/05753 ; des données confirmant l'utilité agronomique d'inocula *Azotobacteraceae* ainsi produits sont rapportées dans Claude et Fillion (2004) et Claude et Giroux (2006). Il est aussi préférable d'utiliser des souches *Azotobacteraceae* rustiques et bien adaptées à la vie dans les sols, avantageusement obtenues selon le protocole décrit dans la demande de brevet français FR 01/15542. Enfin, et pour des raisons d'économie, il n'est plus nécessaire, du fait de la présente invention, d'accroître la molarité réactionnelle du Mo lors de ladite fermentation à l'état solide au-delà de 1 à 10 mM, soit l'équivalent de 0,1 à 1g de Mo par litre ou kilogramme de mélange, soit amplement pour la fabrication des susdites biomasses *Azotobacteraceae* pour une dose-hectare d'inocula (voir Claude et Fillon 2004 et Claude et Giroux 2006). A noter qu'à ce taux, la dose-hectare de Mo n'est plus qu'environ 1% celle normalement appliquée au feuillage ou aux sols lors à l'aide de produits commerciaux tels que FixaMo®.

A terme - toujours dans le cadre de la présente invention, nous chercherons à assurer une sur - accumulation optimale du Mo sur la base de molarités encore plus faibles, voire de l'ordre d'au plus 0,1 mM. De toutes façon, le Mo non-séquestrer (sur-accumulés) par les *Azotobacteraceae,* restera dans la formulation ainsi pulvérisée sur résidus de culture pailleux, et sera donc éventuellement et nécessairement disponible à la culture agronomique.

Par exemple, dans des bacs plastiques - avantageusement stériles, non fermés on place 900 g de résidus de culture de blé haché (1-2 mm) amendés avantageusement avec 100 g de fines particules de sol arable selon le procédé décrit dans la demande de brevet français FR 06/00014. En principe, ces bacs sont intégrables à un mode de formulation bi-phasique tel que décrit dans la demande de brevet français FR 05/05753 (voir Figure 1). La teneur initiale en humidité des bacs est ajustée à ∼67%. Cet ajustement est fait à l'aide solution d'une solution de Na₂MoO₄ de façon à obtenir des **molarités réactionnelles du Mo** dans les bacs allant de 0,1 à 10 *m*M, plus particulièrement de 1 à 2,5 mM. Lors d'une première expérimentation (*Expérimentation 1*) j'ai utilisé une molarité réactionnelle de 10 mM. Lors d'une deuxième expérimentation (*Expérimentation* 2) j'ai opté pour une molarité réactionnelle du Mo de l'ordre de 1 mM. Il est loisible d'utiliser une solution saline pour Azotobacter standard, type ATCC ou Winogradsky.

Les inocula azotobactériens ainsi produits sont par la suite formulés et conditionnés afin de permettre la préparation d'une bouillie pulvérisable sur les résidus de culture au sol (Claude et Fillion 2004), avantageusement selon le mode de conditionnement proposé dans la demande de brevet français FR 05/05753. Une dose-hectare de l'inocula azotobactériens, devenu *de facto* et du fait de la présente invention un vecteur pour les apports in situ de Mo, devrait donc contenir entre 1 x 10¹¹ et 1 x 10¹³, préférablement 5 x 10¹² cellules *Azotobacteraceae,* avantageusement rustiques et bien adaptées à la vie dans les sols (au sens de FR 01/15542) ainsi produites par fermentation à l'état solide.

### Applications bio-industrielles et agronomiques escomptées

Appliquée à l'agriculture, et plus particulièrement à la production de biomasse de culture non - légumineuses (*non-Fabacaceae*), y compris et par exemple le *Lolium multifllorum,* l'invention permet d'améliorer l'efficacité pondérale du Mo ; la production optimale de MSPA peut ainsi être assurée avec une dose-hectare de Mo réduite (Figure 2). Agronomiquement, il est préférable de mener les cultures en fertilisation raisonnée avec pilotage intra-saisonnier des apports d'azotes factionnés de façon à éviter que les sur/sous - doses d'azote fertilisant contraires au bon fonctionnement *in situ* des *Azotobacteraceae* (voir Claude et Fillion 2004). En serres lors d'essais phytogènes il est utile d'apporter l'équivalent d'environ 35 mg/kg d'azote fertilisant ∼ 28 jours post-semis (jps) des plantules testes, avantageusement du *Lolium multiflorum.* Le Mo ainsi apporté aux biomasses *Azotobacteraceae* lors de la fermentation à l'état solide, selon FR 06/00014 par exemple, est avantageusement formulé et conditionnée selon FR 05/05753, est ainsi réutilisé lors de la valorisation bactériologique des résidus de culture pailleux au sol.

J'ai effectué deux (2) expériences en serre afin de démontrer que cette invention est susceptible d'être appliquée en agriculture. Une première expérimentation (*Expérimentation 1*) avec une molarité réactionnelle du Mo maximale de l'ordre de 1 000 mg-Mo par kg de volume réactionnel en fermentation à l'état solide, et une deuxième expérimentation (*Expérimentation 2*) impliquant une molarité réactionnelle du Mo plus réduite de l'ordre de 100 mg-Mo. II s'agissait de démontrer que cette pré-incubation de populations *Azotobacteraceae -* avantageusement lors d'une quelconque fermentation à l'état solide, en présence de quantités de Mo relativement petites par rapport aux **doses-hectare effective de Mo** normalement préconisées de l'ordre de 33, 40 voire 100 g, est susceptible de réduire la taille de ces mêmes doses.

### Expérimentation 1 :

Dans 32 pots contenant chacun 350 g d'un sol séché, tamisé à 4-5 mm et reconstitué, j'ai incorporé par malaxage 3,5 g de résidus de culture pailleux (blé ; hachés et tamisés à 1-2 mm) préalablement incubées avec est sans la présence de l'équivalent d'une dose-hectare de Mo d'environ 1 gramme, soit 100 fois moins que celle actuellement préconisée lors de l'utilisation de FixaMo®. La caractérisation physico-chimique dudit sol alsacien est rapportée au Tableau 1.

| **Tableau 1 : Caractérisation physico-chimique du reconstitués (*Expérimentation 1*)** | | |
|---|---|---|
| Carbone organique | g/kg-sol | 12.2 |
| CEC Metson | méq/kg-sol | 97 |
| pH | na | 6.0 |
| Calcaire total | % | 0 |
| Saturation CAH | % | 77.9 |
| *Ca²⁺* | *% CAH* | *60.4* |
| *K⁺* | *% CAH* | *3.5* |
| *Mg⁺* | *% CAH* | *13.8* |
| *Na²⁺* | *% CAH* | *0.3* |
| *H⁺* | *% CAH* | *22.1* |
| P₂O₅-JH | g/kg-sol | 0.094 |
| K₂O | g/kg-sol | 0.16 |
| MgO | g/kg-sol | 0.27 |
| CaO | g/kg-sol | 1.64 |

Or, cette pré - incubation fait office ici de fermentation à l'état solide, les cellules *Azotobacteraceae* étant ici préalablement disposées (présentes) à la surface des résidus de culture pailleux incorporés au sol. Ce sont nécessairement ces cellules *Azotobacteraceae* qui ici sur-accumulent le Mo au sens de la présente invention, et le re-largueront par la suite en proximité des racines - celles-ci pouvant ainsi le « recycler » librement.

A noter que cette pré-incubation desdits résidus de culture pailleux permit d'augmenter les populations *Azotobacteraceae* en leur proximité par un facteur de 500 à 1 000, soit du même ordre de grandeur que via l'azotobactérisation in situ des mêmes résidus de culture pailleux selon Claude et Fillion 2004. En effet, en situations agronomiques, une telle pré-incubation - une forme de compostage, desdits résidus de culture pailleux au sol étant impraticable et/ou non-rentable, les cellules *Azotobacteraceae* sont produites in vitro - ou du moins ex situ, par fermentation à l'état solide, avantageusement modulaire telle que décrit dans FR06/00014 et FR05/05753, et réintroduites par la suite par pulvérisation liquide des résidus de culture au sol, avantageusement selon FR01/15542 et tel que rapporté dans Claude et Fillion 2004.

Post-semis, j'ai par la suite, apporté 50 ml d'une solution nutritive (Tableau 2) - dépourvue d'azote cette fois-ci, mais apportant par pot de 350 g de sol l'équivalent de 0, 10 33 et 100 g de Mo par hectare, un hectare représentant ici approximativement 10⁹ g de sol sur 10 cm de profondeur en surface une fois lesdits résidus de culture pailleux incorporés. Dès la première coupe (c1) à 28 jours post-semis j'ai apporté, via la même solution nutritive, 35 mg-N par kg de sol.

| **Tableau 2 : Solutions nutritives** | |
|---|---|
| **Quatre solutions molaires (1 M) pour les apports de N/PIK/S/Mg** ; | |
| *1. Ca(NO₃)₂.4H₂O* | *236.1 g*/*l* |
| *2. KNO₃* | *101.1 g*/*l* |
| 3. KH₂PO₄ | 136.1 g/l |
| 4. MgSO₄.7H₂O | 246.5 g/l |
| **Deux solutions oligo-élémentaire, soit pour 1 L ;** | |
| H₃BO₃ | 2.8 g |
| MnCl₂.4H₂O | 1.8 g |
| ZnSO₄.7H₂O | 0.2 g |
| CuSO₄.5H₂O | 0.1 g, et, le cas échéant, |
| NaMoO₄ | 0.025 g |
| FeSO₄.7H₂O | 0,0078 g |
| **Pour prépare 1 L de solution nutritive, dite de « Hoagland » ;** | |
| 7 ml Ca(NO₃)₂ | |
| 5 ml KNO₃ | |
| 2 ml KH₂PO₄ | |
| 2 ml MgSO₄ | |
| 1 ml oligo-éléments (avec ou sans Mo) | |

Afin d'évaluer l'effet phytogène de cette pré-incubation des résidus de culture pailleux j'ai apporté 1 g de semence - soit environs 200 à 230 semences, de *Lolium multiflorum* à la surface des 350 g de sol dans chaque pot. Celles-ci ont été tassées et recouvertes de sable siliceux afin d'assurer une germination et une levée uniforme sans les 3 à 5 jours suivants. J'ai donc disposé ces 8 modalités en carré latin. J'obtiens de la sorte un dispositif expérimental comprenant quatre doses de Mo apportées au sol via une solution nutritive - soit l'équivalent de 0, 10, 33 et 100 g-Mo par hectare, avec et sans une pré-incubation des résidus de culture au sol avec l'équivalent de 1 g-Mo par hectare, soit (4 x 2) x 4 = 32 pots ; l'unité expérimentale de base étant donc chacune des quatre susdites dose-hectare de Mo avec MOA (i.e. pré-incubation avec Mo) appariée à son homologue sans MOA (i.e. pré-incubation sans Mo).

A noter encore une fois, que cette pré-incubation simule effectivement l'azotobactérisation des résidus de culture pailleux au sol avec un inoculum avec et sans l'intégration de Mo par suraccumulation au sens de la présente invention. Puisque industriellement la production de cet inoculum est avantageusement réalisée par fermentation à l'état solide, cette simulation est ici défendable. Dans les faits, cette première incubation des 3,5 g de résidus de culture pailleux au sol avant de les intégrer par malaxage équivaut à une forme de *compostage ex situ.* Ce compostage ex situ étant économiquement inenvisageable en agronomie - du moins pour ce qui concerne la fertilisation azotée des grandes cultures, c'est à ce moment qu'intervient avantageusement l'azotobactérisation des résidus de culture pailleux au sol (*eg.* Claude et Fillion 2004). D'une façon ou d'une autre, les *Azotobacteraceae* auront l'occasion de sur-accumuler le Mo, le choix de la méthode - i.e. compostage *ex situ* par pré-incubation à titre expérimental *versus* le l'azotobactérisation *in situ* en situation agronomiques, étant ici purement pragmatique en fonction de l'échelle de l'essai - i.e. en serre *versus* au champ.

Comme nous le voyons à la Figure 1, dès la première coupe (c1 ; Figure 1-a) le schéma conceptuel présenté à la Figure B commence à ce réaliser, la dose de Mo équivalente à l'hectare effective (optimale) n'est plus que de 10 g en présence de cellules *Azotobacteraceae* pré-incubées en présence de Mo, et l'ayant ainsi nécessairement ainsi sur-accumulé. Cette dose-hectare effective et réduite de Mo avec MOA - i.e. avec ladite pré-incubation et suraccumulation de Mo au sens le la présente invention, permet de produire autant de MSPA qu'avec l'équivalent de 100 g de Mo par hectare sans MOA ; c'est ainsi que l'efficacité pondérale de Mo est amélioré. Cette plus grande efficacité pondérale est aussi appréciable si nous calculons la mobilisation de d'azote par la MPSA (MOBN = MSPA x %Nₜₒₜₐₗ) après une deuxième coupe (c1+c2 = c12 ; Figure 1-b). A noter encore une fois, qu'avec l'équivalent de 10 de Mo apporté par hectare directement aux résidus de culture pailleux au sol plutôt qu'au sol nu, l'invention (MOA) permet de prélever autant d'azote qu'avec l'équivalent de 33, voire 100 g de Mo apporté par hectare mais sans MOA. Cette plus grande efficacité pondérale des faibles doses-hectare de Mo en présence de MOA ce confirme après la récolte d'une troisième coupe de MSPA (c1+c2+c3 = c123 ; Figure 1-c).

Cette amélioration de l'efficacité pondérale du Mo à faible doses équivalentes à 10 ng-Mo par g-sol attribuable à MOA est aussi particulièrement apparente lors de la troisième coupe (c3), soit 84 jours post-semis (Figure 2).

### Expérimentation 2 :

Ayant pu apprécier - *via* l'*Expérimentation* 1, que la pré-incubation en présence de Mo - et donc la sur - accumulation de ce Mo par les *Azotobacteraceae* permettra de réduire la dose-hectare effective de 100 à 10 g, j'ai voulu pousser plus loin cet avantage technique en réduisant la molarité du Mo lors de la pré-incubation, optimisant d'autant plus l'éventuelle dose-hectare effective de Mo. Du coup, j'ai réduit la molarité du Mo dans les bacs à fermentation (pré-incubation) à l'état solide de 10 à 1 mM, soit via l'apport de l'équivalent d'au plus 100 mg par kg de mélange réactionnel (sec). J'ai aussi cette fois-ci apporté par inoculation des biomasses *Azotobacteraceae* préalablement produites et conditionnées à l'état liquide (Agronutrition SAS, Labège) à hauteur de 10⁶ cellules *Azotobacteraceae* par g de résidus de culture pailleux ; une fois ce mélange résidus pailleux (avec et sans 1 mM-Mo) + *Azotobacteraceae* ainsi constitué (50% humidité), il est pré-incubé 48 heures a fin de permettre la susdite sur - accumulation du Mo. J'ai aussi produit un blanc avec 1 mM-Mo sans *Azotobacteraceae.*

L'essai en serre est mené selon le mode opératoire de l'*Expérimentation 1,* sauf qu'ici j'ai utilisé un sol plus riche en matière organique (Tableau 3), et que les doses-hectare de Mo essayées conjointement avec et sans pré-incubation - et donc nécessairement sur-accumulation du Mo, sont maintenant l'équivalent de 0, 1 et 5 g-Mo par hectare. (Nb. Un (1) hectare de sol en surface sur 10 cm de profondeur et en présence d'approximativement 10 tonnes de résidus de culture pailleux enfouis = 10⁹ g de sol).

| **Tableau 3 : Caractérisation physico-chimique des sols *(Expérimentation 2)*** | | |
|---|---|---|
| Carbone organique | g/kg-sol | 31.5 |
| CEC Metson | méq/kg-sol | 141 |
| pH | na | 5.6 |
| Calcaire total | % | 0 |
| Saturation CAH | % | 64.2 |
| *Ca²⁺* | % *CAH* | 55.2 |
| *K⁺* | *% CAH* | *1.5* |
| *Mg⁺* | *% CAH* | *7.0* |
| *Na²⁺* | *% CAH* | *0.5* |
| *H⁺* | *% CAH* | 35.8 |
| P₂O₅-Dyer | g/kg-sol | 0.035 |
| K₂O | g/kg-sol | 0.1 |
| MgO | g/kg-sol | 0.2 |
| CaO | g/kg-sol | 2.18 |

Donc, et pour reprendre les calculs applicables à l'*Expérimentation* 1, une dose-hectare équivalente à 100 g-Mo est réalisée via l'apport post-semis au 350 g de sol (Tableau 3) de 87,5 mL de FixaMo™ (Agronutrition SAS, Carbonne, France) contenant 40 g-Mo par L dilué au 10⁵-ième. Cette solution fut initialement par la suite re-diluée au tiers (1/3) pour obtenir l'équivalent d'une dose-hecare de 33 g-Mo, et celle-ci de nouveau au tiers pour obtenir l'équivalent de 10 à 11 g-Mo par hectare (*Expérimentation 1*). Nous procédons ici de la même manière, sauf qu'ici la solution initiale (i.e. 40 g-Mo par L dilué au 10⁵-ième) est préalablement diluée au quart (1/4) afin d'obtenir une permière dose-hectare équivalent à 25 g-Mo ; les doses-hectare suivantes équivalente à 5 et 1 g-Mo (0 g-Mo étant que la solution nutritive en elle même ; voir *infra*) sont obtenues par des dilutions sucessives au 5^{ième} ce cette solution mère équivalente à 25 g-Mo. Enfin, une autre modification pour cette seconde expérimentation ; un minimum de N_{NO3NH4} sera apporté au semis, soit l'équivalent de 12 mg-N_{NO3NH4} par kg de sol (Tableau 3), et cela afin d'éviter autant que possible des carences en N dès la première coupe (c1 ; 28 jps), sans pour autant nuire au démarrage de la diazotrophie azotobactérienne.

Pour résumer, il s'agit bien de trois (3) modalités d'inoculation azotobactériennes des résidus de culture pailleux au sol à partir de préparation préincubées par fermentation à l'état solide, soit ;
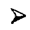 **b (blanc) :** sans Azotobacteraceae, sans préincubation en présence des 1 mM-Mo, ce Mo étant ajouét juste avant la préparation de la bouillie inoculante.
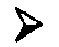 **t (témoin) :** avec Azotobacteraceae, mais toujours sans préincubation en présence des 1 mM-Mo, ce Mo étant ici aussi ajouté juste avant la préparation de la bouillie inoculante.
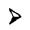 **T (Traité, *i*.*e*. MOA) :** avec Azotobacteraceae, mais ici - et au sens de la présente invention, avec préincubation (par fermentation à l'état solide, en sorte) des 1 mM-Mo de façon à ce qu'une portion - somme tout fort petite, soit effectivement (sur)accumuler par les populations Azotobacteraceae.

Les modalités b et t bénéficies elles aussi d'une préiode de préincubation (sans 1 mM-Mo) ; les populations azotobactériennes réintroduites via t et T seront donc comparables, le Mo n'étant pas ici en soi limitant pour leur croissance, croissance indépendante du niveau de suraccumlation du Mo. J'ai rapporté à la Figure 3 la production de matière sèche des parties aériennes par plantule (mg-MSPA/plt) dès la première coupe (c1) 28 jours post-semis, ainsi que - à la Figure 4, la mobilsiation de la l'azote par plantule (ug-MOBN/plt) par la MSPA après la deuxième coupe (c12) 56 jours post-semis. A noter que - indépendamment de leurs significativités statistiques, la supérioirité des de T en termes de MSPA et MOBN qu'en présence de 5 ng-Mo par g-sol (Mo-5), la démarcation entre T(raité) et t(émoin) étant moins prononcée autrement.

Les éventuels effets phytogènes de ces trois (3) modalités inoculantes en termes de ratios T/t seront donc calculés pour chacune des trois doses-hectare équivalentes à 0, 1 et 5 ng-Mo par g-sol. La valeur du blanc (b) servant ici à caler d'autant plus l'unité expérimentale tripartite - b / t / T, augmentant ainsi la précision de l'essai. Statistiquement, cet essai en carré latin prends donc en compte ; i) la variabilité dans le sens des colonnes, et ii) des lignes, ainsi que iii) selon le positionnement du blanc (b) et - enfin, iv) l'efficacité relative T/t (i.e. erMOA).

Ces analyses statistiques en termes de MFPA, MSPA et de MOBN par plantule (Nb. Le nombre de plantule établie par pot a été déterminé dès c1) illustrent clairement que erMOA est la plus grande en présence de l'équivalent d'une dose-hectare de 5 g (i.e. 5 ng-Mo par g-sol reconstitué ; Figure 5 pour c1 et Figure 6 pour c12). Dans le même sens, mais de manière un peu moins probante, les quantité de matières fraîches (MFPA) et sèches (MSPA), ainsi que leurs mobilisation de l'azote (MOBN) sont elles aussi vraisemblablement supérieures en réponse au traitement (T) par rapport au blanc (b) et au témoin (t) sans suraccumulation supposée du Mo ; ces valeurs pondérales 28 (c1) et 56 (c12) jours post-semis sont rapportées aux Tableaux 4 et 5.

**Tableau 4 ; Matières fraîches (MFPA ; mg) et sèches (MSPA ; mg) par plantules, ainsi que leurs mobilisations de l'azote (MOBN ; ug) 28 jours post-semis (c1) selon la modalité de pré-incubation - sans Azotobacteraceae (b), sans Mo (témoin) avec Azotobacteraceae et Mo (T). (Les moyennes associées au même lettrages ne sont pas significativement différentes ; Duncan α = 5%.)**

| Modalité | mg-MFPA/plt | mg-MSPA/plt | ug-MOBN/plt |
|---|---|---|---|
| blanc (b) | 246 A | 51,2 B | 614 A |
| témoin (t) | 244 A | 53,6 A | 614 A |
| Traité (T) | 250 A | 53,7 A | 627 A |

**Tableau 5 ; Matières fraîches (MFPA ; mg) et sèches (MSPA ; mg) par plantules, ainsi que leurs mobilisations de l'azote (MOBN ; ug) 56 jours post-semis (c12) selon la modalité de pré-incubation - sans Azotobacteraceae (b), sans Mo (témoin) avec Azotobacteraceae et Mo (T). (Les moyennes associées au même lettrages ne sont pas significativement différentes ; Duncan α = 5%.)**

| Modalité | mg-MFPA/plt | mg-MSPA/plt | ug-MOBN/plt |
|---|---|---|---|
| blanc (b) | 487 A | 111 B | 1240 A |
| témoin (t) | 490 A | 116 A | 1267 A |
| Traité (T) | 500 A | 117 A | 1294 A |

Une dernière analyse graphique (Figure 7) nous permet de mieux apprécier les valeurs compilées au Tableau 6, et de préciser ainsi la minoration de la dose-hectare effective de Mo maintenant praticable en raison de cette suraccumulation probable du Mo par les *Azotobacteraceae.* En effet, nous pouvons voir que l'erMOA est nettement la plus importante à 5 ng-Mo par g-sol (i.e. soit l'équivalent de 5 g-Mo par 10⁹ g-sol (1 hectare de sol sur 10 cm de profondeur en surface)), et cela du moins en termes de MSPA ; elles l'est beaucoup moins en terme de MOBN.

En effet, les apports de Mo par hectare via cette suraccumulation de Mo par les Azotobacteraceae (MOA) sont somme toute petits, soit de l'ordre de la fraction de g par ha. Malgré cette petitesse, ils agissent néanmoins sur l'activité phytogène des *Azotobacteraceae,* du moins et surtout en termes de MSPA ; leur action sur MOBN est plus limitée puisqu'une augmentation appréciable de l'activité diazotrophique impliquerait une séquestration azotobactérienne du Mo bien plus pondéreuse. Par exemple, si les *Azotobacteraceae* devaient rapidement s'imposer et représenter du coup près de 10 à 20% de la flore bactérienne du sol, cela impliquerait près de 100 kg de biomasses azotobactériennes par hectare séquestrant plus de 10 à 50 g de Mo, soit bien plus que les 0,1 g apportés via MOA. Même si les *Azotobacteraceae* ne représentaient transitoirement que 1 à 2% de la flore microbienne du sol suite à l'incorporation massive de résidus de culture pailleux, cela impliquerait quand même quelques 10 kg de biomasse azotobactérienne séquestrant de 1 à 5 g de Mo, soit encore une fois bien plus que les 0,1 g apportés *via* MOA. L'apport de 1, voire 0,1 g de Mo via MOA ne peut donc qu'agir sur l'installation initiale des *Azotobacteraceae* au sein de la rhizo/résidusphère d'où une action surtout phytogène, probablement du fait d'une (sur)production d'auxines et/ou de la nitrate réductase, d'une de l'activité diazotrophe extraordinaire.

**Tableau 6 : Efficacité relative de la suraccumulation supposée du Mo par les Azotobacteraceae (MOA) selon la dose de Mo (ng-Mo / g-sol) en terme de la matière sèche des parties aérienne (MSPA) du Lolium multiflorum et sa mobilisation de l'azote (MOBN) 28 (c1), 56 (c12) et 84 (c123) jours post-semis ; les valeurs moyennes pour l'ensemble de ces trois séries de valeurs sont aussi rapportés (cf. Figure 7).**

| dose Mo | - c1 - | | - c12 - | | - c123 - | | Moyenne | c1-c123 |
|---|---|---|---|---|---|---|---|---|
| ng-Mo / g-sol | MSPA | MOBN | MSPA | MOBN | MSPA | MOBN | MSPA | MOBN |
| 0 | 1,00 | 1,00 | 1,00 | 1,00 | 1,00 | 1,00 | 1,00 | 1,00 |
| 1 | 1,04 | 1,05 | 1,01 | 0,99 | | | 1,03 | 1,02 |
| 5 | 1,16 | 1,04 | 1,06 | 1,02 | | | 1,11 | 1,03 |
| 10 | 1,06 | | 0,99 | 1,01 | 1,02 | | 1,02 | 1,01 |
| 33 | 0,91 | | 0,95 | 0,95 | 0,99 | | 0,95 | 0,95 |
| 100 | 1,03 | | 1,00 | 0,96 | 1,02 | | 1,02 | 0,96 |

### Références, bibliographie et brevets pertinents

Allen, R.M., J.T. Roll, P. Rangaraj, V.K. Shah, G.P. Roberts et P.W. Ludden. 1999. Incorporation of molybdenum into the iron-molybdenum cofactor of ntirogenase. J. Biol. Chem. 274: 15869-15874.
Claude, P-P. et L. Fillion. 2004. Effet de l'apport d'un inoculum bactérien aux résidus de culture de maïs-grain au sol sur le rendement et la qualité de blés d'hiver panifiables en France. Agrosol (depuis « Agrosolutions ») 15(1) :23-29.
Claude, P-P. et M. Giroux. 2006. Effet des engrais organo - minéraux inoculés (EOMI) sur la croissance des plants de maïs - grain, les rendements, les prélèvements des éléments nutritifs et la qualité des grains. Agrosolutions 17(1) : 51-64.
Corbin, J.L. et W.A. Bulen. 1969. The Isolation and Identification Of 2,3-Dihydroxybenzoic Acid and 2-N,6-N-Di-( 2,3-Dihydroxybenzoyl) Lysine Formed By Iron-Deficient Azotobacter Vinelandii. Biochemistry Vol. 8, No. 3, M A R C H 1969
Cornish, A.S. et W.J. Page. 2000. Role Of Molybdate and Other Transition Metals In The Accumulation Of Protochelin By Azotobacter Vinelandii. Appl. and Environ. Microbiol., P. 1580-1586 Vol. 66, No. 4
Duhme, A-K., Z. Dauter, R.C. Hider et S. Pohl. 1996. Complexation Of Molybdenum By Siderophores: Synthesis and Structure Of The Double-Helical Cis-Dioxomolybdenum(Vi) Complex Of A Bis(Catecholamide) Siderophore Analogue. Inorg. Chem., 35 (10), 3059-3061, 1996
Franco, A.A. J.R.R. Peres et M. Nery. 1978. The use of Azotobacter paspali N2-ase (C2H2 reduction activity) to measure molybdenum deficiency in soils. Plant and Soils 50:1-11.
Elliot, B.B. et L.E. Mortenson. 1975. Transport of molybdate by Clostridium pasteurianum. J. Bacteriol. 124:1295-1301.
Halsall, D.M.. 1993. Inoculation of wheat straw to enhance lignocellulose breakdown and associated nitrogenase activity. Soil Biology and Biochemistry, 25, Issue 4, Pages 419-429
Halsall, D.M. and A.H. Gibson. 1991. Nitrogenase activity (C2H2 reduction) in straw-amended wheat belt soils in response to diazotroph inoculation. Soil Biol. Biochem., 23, Issue 10, Pages 987-998
Hinton, S.M. et L.E. Mortenson. 1985. Regulation and order of involvement of molybdoproteins during synthesis of molybdoenzymes in Clostridium pasteurianum. J. Bacteriol. 162:485-493.
Horner C. Kenneth And Franklin E. Allison. 1943. Utilization of Fixed Nitrogen By Azotobacter and Influence on Nitrogen Fixation Division of Soils and Fertilizers, Bureau of Plant Industry, Soils and Agricultural Engineering, U. S. Department of Agriculture Received for publication August 6, 1943
Igarashi, R.Y. et L.C. Seefeldt. 2003. Nitrogen fixation : the mechanism of the Mo-dependent nitrogenase. Critical Reviews in Biochemistry and Molecular Biology. 38:351-384.
Loveless, T.M., J. Royden Saah et P.E. Bishop. 1999. Isolation of nitrogen fixing bacteria containing molybdenum-independent nitrogenases form natural environments. Appl. Environ. Microbiol. 65:4223-4226.
Maynard, R.H., R. Premakumar et P.E. Bishop. 1994. Mo-independent nitrogenase 3 is advantageous for diazotrophic growth of Azotobacter vinelandii on sold medium containing molybdenum. J. Bacteriol. 176:5583-5586.
Mouncey, N.J., L.A. Mitchenall et R.N. Pau. 1995. Mutational analysis of genes of the mod locus involved in molybdenum transport, homeostasis and processing in Azotobacter vinelandii. J. Bacteriol. 177:5294-5302.
Page, W.J. et M. Von Tigerstrom. 1982. Iron- and Molybdenum-Repressible Outer Membrane Proteins In Competent Azotobacter Vinelandii. Journal Of Bacteriology, July 1982, P. 237-242 Vol. 151, No. 1
Pienkos, P.T et W.J. Brill. 1981. Molybdenum accumulation and storage in Klebsiella pneumoniae and Azotobacter vinelandii. J. Bacteriol. 145 :743-751.
Premakumar, R., S. Jacobitz, S.C. Rickle et P.E. Bishop. 1996. Phenotypic characterization of a tungsten-tolerant mutant of Azotobacter vinelandii. J. Bacteriol. 178:691-696.
Yates, M.G. et L. Planqué. 1975. Nitrogenase from Azotobacter chroococcum : purification and properties of the component proteins. Eur. J. Biochem. 60:467-476.

## Revendications

1. Utilisation de cellules *Azotobacteraceae* ayant sur-accumulées du Mo (molybdène) pour la biofertilisation de cultures non-Fabaceae nécessitant une dose-hectare effective de Mo.

2. Utilisation de cellules *Azotobacteraceae* selon la revendication 1 **caractérisée en ce que** la **dose-hectare effective de Mo** est comprise entre l'équivalent de 0,5 et 25, plus particulièrement entre 1 et 10, et avantageusement d'environ 5 g-Mo par hectare.

3. Utilisation de cellules *Azotobacteraceae* selon une quelconque des revendications précédentes **caractérisée en ce que** ladite suraccumulation du Mo est à hauteur **d'au moins 100 à 500 x 10⁻¹² ug-Mo par cellule Azotobacteraceae.**

4. Utilisation de cellules *Azotobacteraceae* selon l'une quelconque des revendications précédentes **caractérisée en ce que** lesdites cellules azotobactériennes viables sont apportées aux résidus de culture pailleux au sol en pré-semis d'une céréale ou d'un colza d'hiver.

5. Utilisation de cellules *Azotobacteraceae* selon une quelconque des revendications précédentes **caractérisée en ce que** lesdites *Azotobacteraceae* sont apportées en nombre important.

6. Utilisation de cellules *Azotobacteraceae* selon la revendication précédente **caractérisée en ce que** de **1 x 10¹¹ à 1 x 10¹³,** et avantageusement **5 x 10¹²** desdites cellules *Azotobacteraceae* viables par hectare sont apportées.

7. Utilisation de cellules *Azotobacteraceae* selon la revendication précédente **caractérisée en ce que** les cellules azotobactériennes sont produites par fermentation à l'état solide en présence de Mo.

8. Utilisation de cellules *Azotobacteraceae* selon les deux revendications précédentes **caractérisée en ce que** la molarité réactionnelle du Mo est comprise entre de valeurs de **0,1 et 25 mM** (millimolaire), plus particulièrement entre 0,5 et 12,5 mM-Mo, et avantageusement de **1 à 10 mM-Mo.**

9. Utilisation de cellules *Azotobacteraceae* selon les trois revendications précédentes **caractérisée en ce que** le Mo non-intégré par suraccumulation aux biomasses azotobactériennes lors de ladite fermentation à l'état solide est retenu es ainsi intégré ala dose-hectare effective de Mo apportée à la culture.

10. Inocula azotobactériens pour la biofertilisation de grandes cultures non-légumineuses nécessitant une dose-hectare effective de Mo comprenant des cellules *Azotobacteraceae* ayant sur-accumulé du molybdène (Mo) selon une quelconques des revendications précédentes à hauteur **d'au moins 100 à 500 x 10⁻¹² ug-Mo par cellule *Azotobacteraceae.***
